Europäisches Patentamt

European Patent Office

Office européen des brevets

(11) Publication number: **0 206 721**
A1

# EUROPEAN PATENT APPLICATION

(21) Application number: **86304631.4**

(22) Date of filing: **16.06.86**

(51) Int. Cl.⁴: **C 03 C 25/04**, C 03 C 25/02, G 02 B 6/16

(30) Priority: **17.06.85 US 745046**

(43) Date of publication of application: **30.12.86** Bulletin 86/52

(84) Designated Contracting States: **DE FR GB**

(71) Applicant: **International Standard Electric Corporation, 320 Park Avenue, New York New York 10022 (US)**

(72) Inventor: **Biswas, Dipak Ranjan, 2609 Mallard Drive, Roanoke Virginia 24018 (US)**

(74) Representative: **Ruffhead, Philip Geoffrey, ITT-UK Patent Department Maidstone Road Foots Cray, Sidcup DA14 5HT (GB)**

(54) **Glass fibres.**

(57) A glass fibre (10) consisting of a core (12) provided with cladding (14) is coated with a single coating (16) of a metal, alloy or dielectric capable of withstanding temperatures in excess of 300°C and preferably 500°C. The coating is deposited by a vapour phase reaction process occurring on the surface of the fibre. The fibre may be solid (as shown) or hollow.

EP 0 206 721 A1

## GLASS FIBRES

This invention relates generally to glass fibres and, more particularly, to solid optical fibres, hollow fibres or capillaries coated with high temperature, high strength materials.

Glass fibres are routinely used for a variety of applications. For example, in fibre optics, glass optical fibres are used to transmit voice, information or data signals in the form of light. These optical fibres include a silica core surrounded by a silica cladding having a lower index of refraction and typically have a diameter of about 125 microns, although somewhat larger and somewhat smaller diameter fibres have also been utilised. These fibres are usually coated with polymeric materials to protect the glass surface from abrasion and to facilitate their handling. These polymeric materials cannot withstand continuous exposure to temperatures in excess of from about 200°C to about 300°C. In those applications requiring exposure to higher temperatures, the fibres have been coated with metal by a dip coating process as shown for example in U.S. Patent No. 4,432,606. The metal coating has hitherto been applied by a dip coating process and is satisfactory for applications wherein the coated fibre is exposed to temperatures of up to about 500°C.

As another example of the use of glass fibres, hollow glass fibres or capillaries are used in gas chromotography. These fibres too are of a relatively small diameter and in the application noted above, must withstand corrosive environments and temperatures in excess of 300°C. In addition, the hollow fibres and capillaries must have high strength, in particular, they must be able to be wrapped on a drum of finite diameter without breaking. One type of small diameter hollow fibre or capillary is drawn from a large diameter tube to reduce its cross-section and the reduced cross-section fibre or capillary is coated with a polymeric material to increase its strength and facilitate its being wrapped on a drum as is the case of the polymer coated optical fibres noted above, the resultant hollow fibre or capillaries cannot withstand continuous exposure to temperatures in excess of about 300°C. Thus, their utility is limited.

It is an object of this invention to provide a glass fibre, solid or hollow, that exhibits relatively high strength and which can withstand continuous exposure to relatively high temperatures, e.g. in excess of at least 300°C and, preferably, in excess of 500°C.

According to the invention in its broadest aspect there is provided a glass fibre having a single hermetic coating on its outer surface, characterised in that the coating is composed of metal, metal alloy or dielectric material which has a melting temperature in excess of 300°C and is deposited on the outer surface of the fibre by a vapour phase reaction process.

Embodiments of the invention will now be described by way of example, with reference to the accompanying drawings, in which:-

Figure 1 is a cross-section of an optical fibre coated in accordance with this invention, and

Figure 2 is a cross-section of a hollow fibre or capillary coated in accordance with this invention.

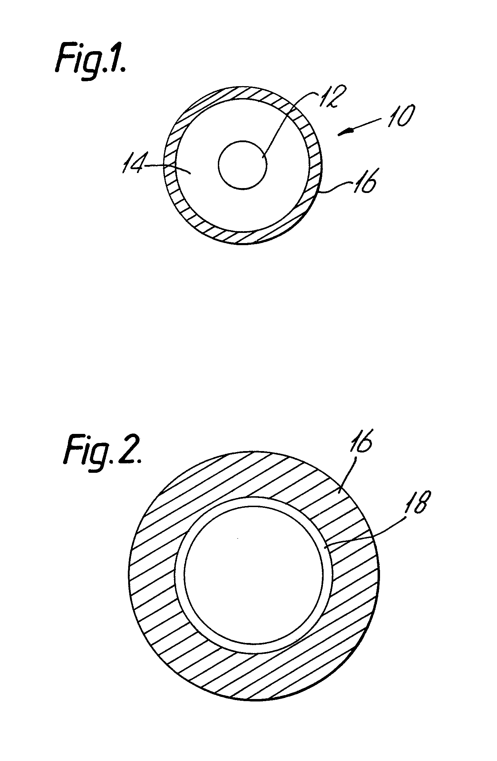

In Figure 1, there is illustrated a solid optical fibre 10 of the type utilised in fibre optic systems to transmit voice, information or data signals in the form of light. The optical fibre 10 is generally conventional and includes a doped fused silica ($SiO_2$) core 12 and a doped or undoped fused silica cladding 14. As is conventional, the cladding 12 has a lower index of refraction than the core to cause the light to be transmitted through the fibre. Suitable dopants for the core include germania, phosphorous or any material raising the index of refraction of the silica; suitable dopants for the cladding include fluorine or any material that depresses the index of refraction of silica. Conventional fibres used in fibre optics have a small diameter of the order of 100 to 150 microns.

Around the cladding 14 is a single hermetic coating 16 of a metal, metal alloy or dielectric material. No other coating is applied to the fibre. The metal or dielectric is so selected and applied that it can withstand exposure to temperatures in excess of $300^{o}C$ without deterioration. In other words, the coating material must have a melting temperature in excess of $300^{o}C$. Examples of such metals are aluminium (Al), nickel (Ni), silicon (Si), titanium (Ti), copper (Cu), tungsten (W), and molybdenum (Mo); examples of such dielectrics are silicon nitride ($Si_3N_4$), tin oxide ($SnO_2$), boron nitride (BN), titanium oxide ($TiO_2$), aluminium oxide

$(Al_2O_3)$, silicon oxynitride (Si-O-N), silicon carbide (SiC) and boron carbide (BC). The coating must be applied in such a way as not to weaken the strength of the fibre and this may be accomplished by the process described in my patent application Serial No. 580,280 or in my co-pending application Serial No. 644,305. In both of these applications, there is described a process of coating a glass fibre with a metal, metal alloy or dielectric material by means of a heterogeneous nucleation thermochemical deposition process (HNTD). This is a vapour phase reaction wherein the surface of the fibre is heated to a predetermined temperature and exposed to reactant gases so that a chemical reaction takes place on the surface of the fibre to cause the coating material to be deposited directly on it. One difference between the coated fibre according to this invention and the coated fibre described in the co-pending applications referred to is that the fibre in this invention does not include a second outer coating of polymeric material.

As an example, a single mode optical fibre was coated with nickel (Ni) and another such fibre was coated with aluminium (Al) by the process described in application Serial No. 644,305. The reactants were tri-isobutyl aluminium and isobutylene at $260^{\circ}C$ for the aluminium and nickel carbonyl at $200^{\circ}C$ for the nickel.

As another example, a dielectric coating of tin oxide was deposited on an optical glass fibre having a surface temperature of about $500^{\circ}C$ by carrying out a CVD reaction of tetramethyl tin and oxygen.

In Figure 2, there is illustrated the use of the hermetic coating 16 on a hollow optical fibre or capillary tube 18. The capillary tube 18 is made of any suitable glass material and can be of any suitable inner and outer diameters, it being understood that the material and diameters are dependent on the intended use of the coated tube. The single hermetic coating 16 is deposited on the outer surface of the tube 18. These tubes are drawn down to their relatively small diameter from a large tube in much the same manner as the optical fibre 10 described above is drawn down from a larger solid preform. Thus, the deposition process for the hollow fibre or capillary embodiment is the same as that described above and in the co-pending applications.

As examples, hollow fibres or capillaries have been coated with aluminium, nickel and tin oxide in the same manner as described for the optical fibres. In addition, hollow fibres or tubes have been coated with alloys such as iron (Fe), chrome (Cr), and cobalt (Co) in nickel (Ni).

CLAIMS:

1.   A glass fibre having a single hermetic coating on its outer surface, characterised in that the coating (16) is composed of metal, metal alloy or dielectric material which has a melting temperature in excess of 300°C and is deposited on the outer surface of the fibre (10) by a vapour phase reaction process.

2.   A fibre as claimed in claim 1, characterised in that the vapour phase reaction occurs on the outer surface.

3.   A fibre as claimed in claim 1, characterised in that the coating material is aluminium, nickel, silicon, titanium, copper, tungsten, molybdenum, tin oxide, silicon nitride, boron nitride, titanium oxide, aluminium oxide, silicon oxynitride, silicon carbide or boron carbide.

4.   A fibre as claimed in claim 1, characterised in that the melting temperature is in excess of 500°C.

5.   A fibre as claimed in claim 1, characterised in that the dielectric material includes metal oxides, nitrides and carbides.

6.   A fibre as claimed in claim 1, characterised in that the fibre is solid.

7.   A fibre as claimed in claim 1, characterised in that the fibre is hollow.

0206721

Fig.1.

Fig.2.

**European Patent Office**

## EUROPEAN SEARCH REPORT

Application number

| | DOCUMENTS CONSIDERED TO BE RELEVANT | | EP 86304631.4 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | US - A - 4 321 073 (BLAIR) <br> * Claims 5,6,8; column 2, line 58 - column 3, line 31 * <br> -- | 1-4,6 | C 03 C 25/04 <br> C 03 C 25/02 <br> G 02 B 6/16 |
| X | US - A - 4 306 897 (MAKLAD) <br> * Claims 1,3,4; column 2, lines 11-21 * <br> -- | 1-6 | |
| X | EP - A1 - 0 135 993 (STANDARD TELE-PHONES AND CABLES) <br> * Claims 1-15 * <br> ---- | 1-6 | |

|  | TECHNICAL FIELDS SEARCHED (Int. Cl.4) |
|---|---|
| | C 03 C <br> C 03 B <br> G 02 B <br> C 23 C <br> G 01 N |

The present search report has been drawn up for all claims

| Place of search | Date of completion of the search | Examiner |
|---|---|---|
| VIENNA | 02-09-1986 | HAUSWIRTH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82